# EUROPEAN PATENT APPLICATION

(11) **EP 2 536 099 A2**
(43) Date of publication of application: **19.12.2012**
(21) Application number: 11750205.4
(22) Date of filing: 20.04.2011
(51) Int. Cl.: H04L 29/06

(54) **METHOD AND ACCESS NODE FOR PREVENTING ADDRESS CONFLICT**

(71) Applicant: Huawei Technologies Co., Ltd., Shenzhen, Guangdong 518129 (CN)
(72) Inventor: DAI, Yuehua, Guangdong 518129 (CN); LUO, Yong, Guangdong 518129 (CN); YANG, Xianjie, Guangdong 518129 (CN)
(74) Representative: Gleiter, Hermann
(86) International application number: PCT/CN2011/073048
(87) International publication number: WO 2011/107052

(57) **Abstract**

A method for preventing address conflict and an access node are provided. The method includes: when an uplink packet is received, obtaining a medium access control MAC address and a link local address LLA which are of a client and are carried in the packet, where the packet is an IPV6 protocol packet borne over Ethernet; generating a corresponding VMAC address for the MAC address according to a predetermined rule; generating a corresponding VLLA according to the VMAC address, where the VMAC address and the VLLA have one-to-one correspondence, and the generated VMAC address and VLLA are unique in one network under a broadband network gateway BNG; replacing, with the VMAC address and the VLLA, the MAC address and the LLA that are in the packet; and transmitting an uplink packet including the VMAC address and the VLLA. In addition, an access node is also provided.

## Description

### FIELD OF THE INVENTION

Embodiments of the present invention relate to the field of bandwidth access networks, and in particular, to a method for preventing address conflict, and an access node.

### BACKGROUND OF THE INVENTION

In an environment of Internet protocol version 6 (IPV6, Internet Protocol Version 6), a typical telecommunication access network scenario is usually a three-level device location manner of residential gateway (RG, Residential Gateway) - access node (AN, Access Node) - broadband network gateway (BNG, Broadband Network Gateway), where an RG, as a home gateway of a user, provides the user with a service access port and multiple access manners, and a BNG, as a layer 3 edge, is usually a broadband remote access server (BRAS, Broadband Remote Access Server) or a service router (SR, Service Router) device, and has functions such as allocating an Internet protocol (IP, internet protocol) address, routing, and serving as a service control gateway.

In the prior art, a client may obtain a prefix address by transmitting a request message to an RG-AN-BNG three-level device. However, with the rapid development of networks, the number of users of the client gradually increases, so that a management load of the BNG is heavy, there are many IPV6 addresses, the number of neighbor table entries to be learned is large, and a probability of conflict of medium access control (MAC, Medium Access Control) addresses increases. Because a link local address (LLA, Link Local Address) of the client is automatically generated by the client according to the MAC address, a probability of conflict of LLAs also increases, which easily causes an attack of denial of service (DOS, Denial of Service), and reduces system security.

### SUMMARY OF THE INVENTION

Embodiments of the present invention provide a method for preventing address conflict, and an access node, which are used to prevent conflict between MAC addresses or LLAs, where the MAC addresses or the LLAs are included in packets received by a broadband network gateway, avoid an attack caused by address conflict, and improve system security.

An embodiment of the present invention provides a method for preventing address conflict, where the method includes: when an uplink packet is received, obtaining a medium access control MAC address and a link local address LLA which are of a client and are carried in the packet, where the packet is an IPV6 protocol packet borne over Ethernet; generating a corresponding VMAC address for the MAC address according to a predetermined rule; generating a corresponding VLLA according to the VMAC address, where the VMAC address and the VLLA have one-to-one correspondence, and the generated VMAC address and VLLA are unique in one network under a broadband network gateway BNG; replacing, with the VMAC address and the VLLA, the MAC address and the LLA that are in the packet; and transmitting an uplink packet including the VMAC address and the VLLA.

An embodiment of the present invention provides an access node, including: a receiver, configured to, when an uplink packet is received, obtain a medium access control MAC address and a link local address LLA which are of a client and are carried in the packet, where the packet is an Internet protocol version IPV6 protocol packet borne over Ethernet; a first allocating unit, configured to generate a corresponding VMAC address for the MAC address according to a predetermined rule; a second allocating unit, configured to generate a corresponding VLLA according to the VMAC address, where the VMAC address and the VLLA have one-to-one correspondence, and the generated VMAC address and VLLA are unique in one network under a broadband network gateway BNG; a replacing unit, configured to replace, with the corresponding VMAC address and VLLA, the MAC address and the LLA that are in the packet; and a transmitter, configured to transmit an uplink packet including the VMAC address and the VLLA.

It may be seen from foregoing technical solutions that, the embodiments of the present invention have the following advantages.

When the uplink packet carrying the MAC address and the LLA is received, a unique VMAC address is allocated for the MAC address in the packet, and the VLLA is generated according to the VMAC address. Therefore, the generated VLLA is also unique. The MAC address and the LLA that are in the packet are replaced with the VMAC address and the VLLA, and a packet after replacement is transmitted, so that both the VMAC address and the VLLA in the uplink packet received by the broadband network gateway are unique, which avoids address conflict and improves system security.

### BRIEF DESCRIPTION OF THE DRAWINGS

FIG. 1 is a schematic diagram of an embodiment of a telecommunication access node according to the present invention;
FIG. 2 is a schematic diagram of an embodiment of a method for preventing address conflict according to the present invention;
FIG. 3 is a schematic diagram of another embodiment of a method for preventing address conflict according to the present invention;
FIG. 4 is a schematic diagram of another embodiment of a method for preventing address conflict according to the present invention;
FIG. 5 is a schematic diagram of an embodiment of an access node according to the present invention; and
FIG. 6 is a schematic diagram of another embodiment of an access node according to the present invention.

### DETAILED DESCRIPTION OF THE EMBODIMENTS

Embodiments of the present invention provide a method for preventing address conflict, and an access node, which are used to prevent conflict between MAC addresses or LLAs, where the MAC addresses or the LLAs are included in packets received by a broadband network gateway, avoid a DOS attack, and improve system security.

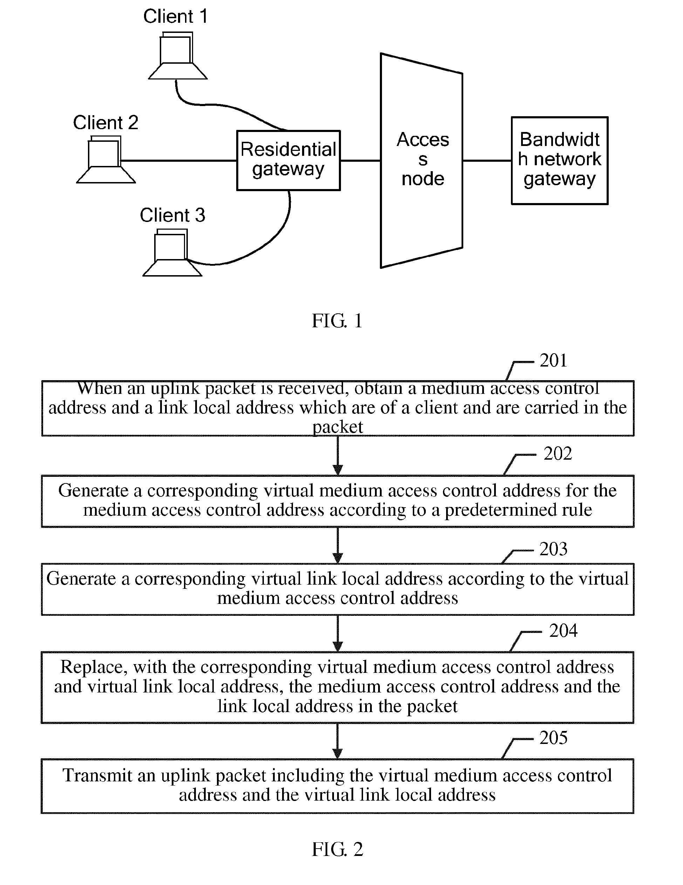

To better understand the technology, referring to FIG. 1, a schematic diagram of a telecommunication access network is shown, where basic architecture of RG-AN-BNG is adopted in the telecommunication access network. An RG, as a home gateway of a user, provides the user with a service access port and multiple access manners. A bandwidth network gateway BNG, as a layer-3 edge, is usually a BRAS or an SR device, and has functions such as allocating an IP address, routing, and serving as a service control gateway.

In the embodiments of the present invention, a packet is transmitted by a client to the RG, and is forwarded by the RG and the AN, and the BNG receives the packet, where the packet refers to an IPV6 protocol packet borne over Ethernet. It should be noted that, all packets mentioned in the embodiments of the present invention refer to IPV6 protocol packets borne over Ethernet. Referring to FIG. 2, an embodiment of a method for preventing address conflict in the embodiments of the present invention includes:
201: When an uplink packet is received, obtain a medium access control MAC address and a link local address LLA which are of a client and are carried in the packet.

In the embodiment of the present invention, when an uplink packet forwarded by an RG is received, an access node obtains a medium access control MAC address and a link local address LLA which are of a client and are carried in the packet, where the packet is an IPV6 protocol packet borne over Ethernet. The access node may be any one of various node devices such as an optical line terminal device (OLT, optical line terminal), a digital subscriber line access multiplexer (DSLAM, Digital Subscriber Line Access Multiplexer), an optical network unit (OUN, Optical Network Unit), and a multiple dwelling unit (MDU, Multiple Dwelling Unit).

The LLA is one type of IPV6 unicast address, an IPV6 unicast address further includes a global unicast address, a site local address and so on, the LLA is used for communication between link local nodes in the Neighbor Discovery Protocol and stateless auto-configuration, and a data packet using the LLA as a source address or destination address is not forwarded to other links.

In the embodiment of the present invention, when enabling the IPV6 protocol, the client automatically generates a corresponding LLA, which has a one-to-one mapping relation to its MAC address, where the client includes, but is not limited to: a neighbor discovery protocol user terminal, a point-to-point protocol user terminal, a dynamic host configuration protocol user terminal, a extensible authentication protocol user terminal, and a layer 2 transport protocol user terminal.

202: Generate a corresponding VMAC address for the MAC address according to a predetermined rule.

After obtaining the MAC address and the LLA, the access node generates a corresponding virtual medium access control (VMAC, Virtual Medium Access Control) address for the MAC address according to a predetermined rule. In the embodiment of the present invention, there are multiple manners for generating the corresponding VMAC address for the MAC address according to the predetermined rule. For example, a VMAC address pool may be established, and an idle VMAC address may be obtained from the VMAC address pool to be used as a VMAC address corresponding to the MAC address, where the VMAC address in the VMAC address pool is unique. Alternatively, a VMAC address may be allocated for the MAC address of the received packet in sequence by using a VMAC address table, where the VMAC address in the VMAC address table is also unique. Alternatively, a VMAC address may be calculated according to a certain algorithm and according to the MAC address and a port number of a corresponding access device to which the MAC address is reported. It should be noted that, in the embodiment of the present invention, there are multiple methods for allocating a unique VMAC address for the MAC address, which are not limited herein. In addition, that the VMAC address is unique means that the VMAC address does not conflict with others in one network that is under a broadband network gateway BNG and is as shown in FIG. 1, that is, each VMAC address is different from other VMAC addresses in the network.

203: Generate a corresponding VLLA according to the VMAC address.

After generating the corresponding VMAC address for the MAC address, the access node generates a corresponding virtual link local address (VLLA, Virtual Link Local Address) according to the VMAC address, where the VMAC address and VLLA have one-to-one correspondence, and the generated VMAC address and VLLA are unique in the one network under the bandnetwork gateway.

204: Replace, with the corresponding VMAC address and VLLA, the MAC address and the LLA that are in the packet.

After generating the VMAC address and the VLLA, the access node replaces, with the corresponding VMAC address and VLLA, the MAC address and the LLA that are in the packet.

205: Transmit an uplink packet including the VMAC address and the VLLA.

After performing replacement, the access node transmits an uplink packet including the VMAC address and the VLLA, so that the packet received by the broadband network gateway includes the VMAC address and the VLLA, and both the VMAC address and the VLLA are unique. That the VMAC address and the VLLA are unique means that no conflict occurs in the one network that is under the broadband network gateway and is as shown in FIG. 1.

In the embodiment of the present invention, the access node allocates a unique VMAC address for the MAC address in the uplink packet, and generates the corresponding VLLA according to the VMAC address; and the access node replaces, with the VMAC address and the VLLA, the MAC address and the LLA that are in the packet, and transmits a packet after replacement to the broadband network gateway, so that the VMAC address and the VLLA in the packet received by the broadband network gateway are unique, which effectively avoids address conflict and improves system security.

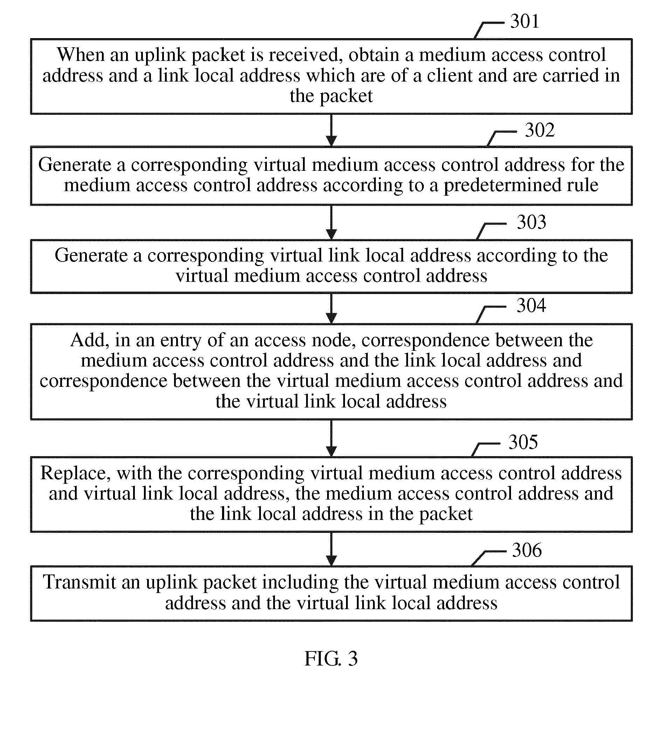

To better understand the technology, referring to FIG. 3, an embodiment of a method for preventing address conflict in the embodiments of the present invention includes:
301: When an uplink packet is received, obtain a medium access control MAC address and a link local address LLA which are of a client and are carried in the packet.

Content described in step 301 is the same as the content described in step 201 in the embodiment shown in FIG. 2, and is not detailed herein again.

302: Generate a corresponding VMAC address for the MAC address according to a predetermined rule.

In the embodiment of the present invention, content described in step 302 is the same as the content described in step 302 in the embodiment shown in FIG. 2, and is not detailed herein again.

303: Generate a corresponding VLLA according to the VMAC address.

After allocating a unique VMAC address for a MAC address, an access node generates a corresponding VLLA according to the VMAC address. In the embodiment of the present invention, the corresponding VLLA may be generated for the VMAC address by using a stateless auto-configuration method or a sequential allocation method. For example, the corresponding VLLA may be generated for the VMAC address by using a standard EUI-64 (64-bit extended unique identifier) method, or, the corresponding VLLA may be allocated for the VMAC address by searching a VLLA table in a sequence of receiving an uplink packet. It should be noted that, in actual application, as long as the generated VLLA is unique, there are multiple methods for generating the corresponding VLLA according to the VMAC address, which are not limited herein.

304: Add, in an entry of the access node, correspondence, between the MAC address and the LLA and correspondence between the VMAC address and the VLLA.

After obtaining the VMAC address and the VLLA that have one-to-one correspondence, the access node adds, in an entry of the access node, correspondence between the MAC address and an LLA and correspondence between the VMAC address and the VLLA.

In the embodiment of the present invention, for a structure of the entry, reference may be made to the following table:

| **Original address** | | **Virtual address** | |
|---|---|---|---|
| MAC | LLA1 | VMA | VLL |
| 1 | | C1 | A1 |
| MAC | LLA2 | VMA | VLL |
| 2 | | C2 | A2 |
| MAC | LLA3 | VMA | VLL |
| 3 | | C3 | A3 |

305: Replace, with the corresponding VMAC address and VLLA, the MAC address and the LLA that are in the packet.

After adding the correspondence in the entry, the access node replaces, with the corresponding VMAC address and VLLA, the MAC address and the LLA that are in the packet.

306: Transmit an uplink packet including the VMAC address and the VLLA.

The access node transmits an uplink packet including the VMAC address and the VLLA.

In the embodiment of the present invention, the access node generates a unique VMAC address for a MAC address in a received uplink packet, generates a corresponding VLLA according to the unique VMAC address, replaces, with the VMAC address and the VLLA, the MAC address and an LLA in the packet and then transmits the a packet after replacement a broadband network gateway, so that the VMAC address and the VLLA that are received by the broadband network gateway are unique, which avoids address conflict in the broadband network gateway, and improves system security.

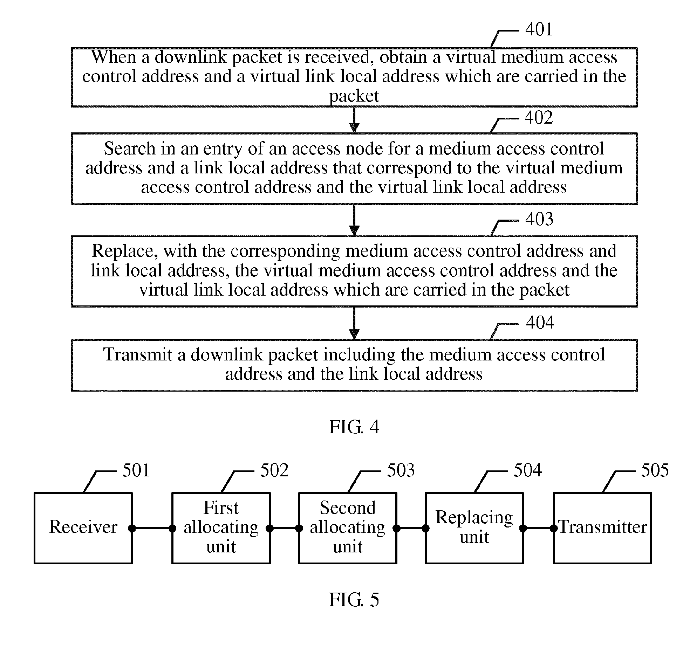

The embodiments shown in FIG. 2 and FIG. 3 describe a process of replacing, with a VMAC address and a VLLA, an original MAC address and LLA in an uplink packet and transmitting a uplink packet after replacement to a broadband network gateway. Because the VMAC address and the VLLA are unique, address conflict may be effectively avoided in the broadband network gateway. In the embodiments of the present invention, after processing a received packet, a broadband network gateway transmits a response packet. A manner in which an access node processes a downlink packet is introduced in the following. Referring to FIG. 4, an embodiment of a method for preventing address conflict in the embodiments of the present invention includes:

401: When a downlink packet is received, obtain a VMAC address and a VLLA which are carried in the packet.

When a downlink packet is received, an access node obtains a VMAC address and a VLLA which are carried in the packet.

402: Search in an entry of an access node for a MAC address and an LLA that correspond to the VMAC address and the VLLA.

When forwarding the packet, the access node needs to replace a virtual address with a MAC address and an LLA of an actual destination address. Therefore, the access node searches in an entry for a MAC address and an LLA that correspond to the VMAC address and the VLLA in the downlink packet. In the embodiment of the present invention, there are multiple manners in which the access node searches for correspondence between the corresponding MAC address and LLA, for example, searching according to a unique VMAC address, or searching according to a unique VLLA, or searching according to correspondence between the VMAC address and the VLLA. In actual application, a searching manner may be determined in a specific manner, which is not limited herein.

403: Replace, with the corresponding MAC address and LLA, the VMAC address and the VLLA which are carried in the packet.

After obtaining the corresponding MAC address and LLA, the access node replaces, with the corresponding MAC address and LLA, the VMAC address and the VLLA which are carried in the packet.

404: Transmit a downlink packet including the MAC address and the LLA.

After replacing the VMAC address and the VLLA, the access node transmits a downlink packet including the MAC address and the LLA.

In the embodiment of the present invention, address replacement are completed by using the VMAC address and VLLA, and the MAC address and LLA saved by the access node, so that the MAC address and the LLA are included in the downlink packet transmitted to a client, thereby achieving successful forwarding of a broadband network gateway.

Referring to FIG. 5, an embodiment of an access node in the embodiments of the present invention includes:
a receiver 501, configured to, when an uplink packet is received, obtain a medium access control MAC address and a link local address LLA which are of a client and are carried in the packet, where the packet is an Internet protocol version IPV6 protocol packet borne over Ethernet;
a first allocating unit 502, configured to generate a corresponding VMAC address for the MAC address according to a predetermined rule;
a second allocating unit 503, configured to generate a corresponding VLLA according to the VMAC address, where the VMAC address and the VLLA have one-to-one correspondence, and the generated VMAC address and VLLA are unique in one network under a broadband network gateway BNG;
a replacing unit 504, configured to replace, with the corresponding VMAC address and VLLA, the MAC address and the LLA that are in the packet; and
a transmitter 505, configured to transmit an uplink packet including the VMAC address and the VLLA.

The access node allocates a unique VMAC address for the MAC address in the uplink packet, and generates the corresponding VLLA according to the VMAC address; and the access node replaces, with the VMAC address and the VLLA, the MAC address and the LLA that are in the packet, and transmits a packet after replacement to the broadband network gateway, so that the VMAC address and the VLLA in the packet received by the broadband network gateway are unique, which effectively avoids address conflict and improves system security.

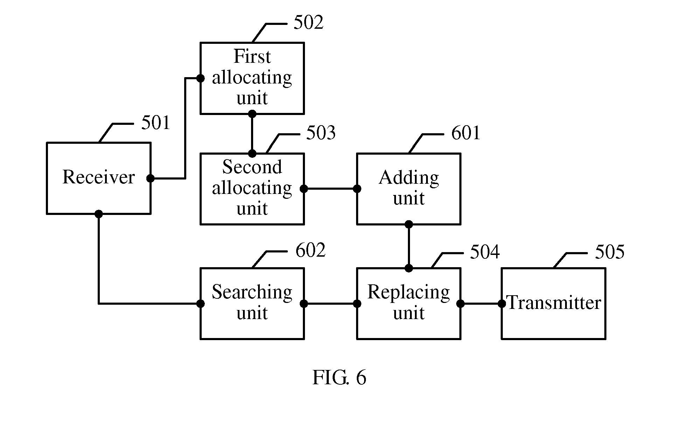

To better understand the present invention, referring to FIG. 6, an embodiment of an access node in the embodiments of the present invention includes:

A receiver 501, a first allocating unit 502, a second allocating unit 503, a replacing unit 504, and a transmitter 505 that are shown in FIG. 6 are the same as the content described in the embodiment in FIG. 5, and are not detailed herein again.

In the embodiment of the present invention, the receiver 501 is further configured to, when a downlink packet is received, obtain a VMAC address and a VLLA which are carried in the packet.

The replacing unit 504 is further configured to replace, with a corresponding MAC address and LLA, the VMAC address and the VLLA which are carried in the received downlink packet.

The transmitter 505 is further configured to transmit a downlink packet including the MAC address and the LLA.

In the embodiment of the present invention, the access node further includes:
an adding unit 601, configured to add, in an entry of the access node, correspondence between the MAC address and the LLA and correspondence between the VMAC address and the VLLA; and
a searching unit 602, configured to search in the entry of the access node for the MAC address and LLA that correspond to the VMAC address and the VLLA.

In the embodiment of the present invention, when the access node receives an uplink packet, the receiver 501 obtains a MAC address and an LLA which are carried in the packet; then, the first allocating unit 502 allocates a unique VMAC address for the MAC address, the second allocating unit generates a corresponding VLLA according to the VMAC address, and the adding unit 601 adds, in an entry of the access node, correspondence between the MAC address and the LLA and correspondence between the VMAC address and the VLLA; then, the replacing unit 504 replaces, with the corresponding VMAC address and VLLA, the MAC address and the LLA that are in the packet; and finally, the transmitter 505 transmits an uplink packet including the VMAC address and the VLLA.

In addition, in the embodiment of the present invention, when the access node receives the downlink packet, the receiver 501 obtains the VMAC address and VLLA which are carried in the packet, the searching unit 602 searches in the entry of the access node for the MAC address and LLA that correspond to the VMAC address and the VLLA, and after the MAC address and LLA are obtained, the replacing unit 503 replaces, with the corresponding MAC address and LLA, the VMAC address and the VLLA which are carried in the packet, and finally, the transmitter 504 transmits a downlink packet including the MAC address and the LLA.

In the embodiment of the present invention, the access node allocates a unique VMAC address for a MAC address in a received uplink packet, generates a corresponding VLLA according to the unique VMAC address, replaces, with the VMAC address and the VLLA, the MAC address and the LLA that are in the packet and then transmits a packet after replacement to the broadband network gateway, so that the VMAC address and the VLLA in the broadband network gateway are unique, which avoids address conflict in the broadband network gateway, and improves system security.

Persons of ordinary skill in the art may understand that all or part of the steps of the methods in the foregoing embodiments may be implemented by a program instructing relevant hardware. The program may be stored in a computer readable storage medium, and the foregoing storage medium may be a read-only memory, a magnetic disk, or an optical disk, and so on.

A method for preventing address conflict and an access node that are provided in the present invention are introduced in detail above. Persons of ordinary skill in the art may make modifications to the specific implementation manners and the application scope according to the idea in the embodiments of the present invention. In conclusion, the content of this specification shall not be construed as a limitation on the present invention.

## Claims

1. A method for preventing address conflict,
when an uplink packet is received, obtaining a medium access control MAC address and a link local address LLA which are of a client and are carried in the packet, wherein the packet is an Internet protocol version IPV6 protocol packet borne over Ethernet;
generating a corresponding VMAC address for the MAC address according to a predetermined rule;
generating a corresponding VLLA according to the VMAC address, wherein the VMAC address and the VLLA have one-to-one correspondence, and the generated VMAC address and VLLA are unique in one network under a broadband network gateway BNG;
replacing, with the corresponding VMAC address and VLLA, the MAC address and the LLA that are in the packet; and
transmitting an uplink packet comprising the VMAC address and the VLLA.

2. The method according to claim 1, wherein the generating the corresponding VLLA according to the VMAC address comprises:
generating the corresponding VLLA for the VMAC address by using a stateless auto-configuration method or a sequential allocation method.

3. The method according to claim 1, wherein before the transmitting the uplink packet comprising the VMAC address and the VLLA, the method further comprises:
adding, in an entry of an access node, correspondence between the MAC address and the LLA and correspondence between the VMAC address and the VLLA.

4. The method according to claim 1, further comprising:
when a downlink packet is received, obtaining a VMAC address and a VLLA which are carried in the packet;
searching in an entry of an access node for a MAC address and an LLA that correspond to the VMAC address and the VLLA;
replacing, with the corresponding MAC address and LLA, the VMAC address and the VLLA which are carried in the packet; and
transmitting a downlink packet comprising the MAC address and the LLA.

5. An access node, comprising:
a receiver, configured to, when an uplink packet is received, obtain a medium access control MAC address and a link local address LLA which are of a client and are carried in the packet, wherein the packet is an Internet protocol version IPV6 protocol packet borne over Ethernet;
a first allocating unit, configured to generate a corresponding VMAC address for the MAC address according to a predetermined rule;
a second allocating unit, configured to generate a corresponding VLLA according to the VMAC address, wherein the VMAC address and the VLLA have one-to-one correspondence, and the generated VMAC address and VLLA are unique in one network under a broadband network gateway BNG;
a replacing unit, configured to replace, with the corresponding VMAC address and VLLA, the MAC address and the LLA that are in the packet; and
a transmitter, configured to transmit an uplink packet comprising the VMAC address and the VLLA.

6. The access node according to claim 5, further comprising:
an adding unit, configured to add, in an entry of the access node, correspondence between the MAC address and the LLA and correspondence between the VMAC address and the VLLA.

7. The access node according to claim 5, ,
the receiver is further configured to, when a downlink packet is received, obtain a VMAC address and a VLLA which are carried in the packet;
the replacing unit is further configured to replace, with a corresponding MAC address and LLA, the VMAC address and the VLLA which are carried in the packet; and
the transmitter is further configured to transmit a downlink packet comprising the MAC address and the LLA.

8. The access node according to claim 7, further comprising:
a searching unit, configured to search in an entry of the access node for the MAC address and an LLA that correspond to the VMAC address and the VLLA.
